# FASCICULE DE BREVET EUROPEEN

(11) **EP 2 083 206 B1**
(45) Date de publication et mention de la délivrance du brevet: **12.12.2012**
(21) Numéro de dépôt: 09290040.6
(22) Date de dépôt: 20.01.2009
(51) Int. Cl.: F16L 37/098

(54) **Dispositif de raccordement pour transfert de fluide, circuit l'incorporant et son procédé de montage/démontage**
Anschlussvorrichtung für den Transfer eines Fluids, Kreislauf, der diese Vorrichtung umfasst, und entsprechendes Montage-/Demontageverfahren
Connection device for fluid transfer, circuit including said device and assembly/disassembly method thereof

(30) Priorité: 25.01.2008 FR 0800389
(43) Date de publication de la demande: 29.07.2009
(73) Titulaire: Hutchinson, 75008 Paris (FR)
(72) Inventeur: Milanini, Luc, 45120 Corquilleroy (FR); Ully, Stéphane, 45210 Fontenay sur Loing (FR); Gillet, Damien, 45200 Amilly (FR)
(74) Mandataire: Bolinches, Michel Jean-Marie

(56) Documents cités:
- WO-A-96/18842
- WO-A-2007/042344
- AT-B- 29 973
- FR-A- 2 234 882

## Description

La présente invention concerne un dispositif de raccordement pour une ligne de transfert de fluide, un circuit de retour d'injecteur de carburant l'incorporant, et un procédé de montage/ démontage de ce dispositif autour d'un embout tubulaire mâle et dans un embout tubulaire femelle à raccorder à cet embout mâle. L'invention s'applique d'une manière générale à tous raccordements entre de tels embouts transférant un fluide en particulier à basse pression et notamment à des rampes d'injection de carburant pour véhicules à moteur.

D'une manière générale, il est connu pour les rampes d'injection de carburant d'utiliser des dispositifs de raccordement à embout tubulaire mâle venant s'emmancher d'une manière étanche dans un embout tubulaire femelle ou « canule », au moyen d'un organe de liaison flexible qui est monté solidaire de l'embout mâle et qui est verrouillable à son extrémité axialement intérieure dans une gorge circonférentielle interne de l'embout femelle sous la commande d'un organe de verrouillage coopérant avec une partie axialement extérieure de cet organe de liaison.

On peut par exemple citer le document WO-A-2007/042344 qui présente un tel dispositif où l'organe de liaison comporte deux bras axiaux diamétralement opposés qui sont formés d'un seul tenant avec l'embout mâle et qui viennent se verrouiller élastiquement dans la gorge de l'embout femelle par une flexion qui leur est appliquée dans la direction radiale, en s'opposant à leur traction axialement vers l'extérieur.

Un inconvénient majeur de ces dispositifs de raccordement connus est qu'ils ne garantissent pas le verrouillage de l'embout mâle dans l'embout femelle dans la position souhaitée, i.e. en s'assurant que l'organe de liaison soit correctement positionné dans la gorge de raccordement de l'embout femelle préalablement à son verrouillage dans cette position.

Le document AT-B-29 973 divulgue un dispositif de raccordement pour ligne de transfert de fluide entre un embout mâle et un embout femelle, comprenant trois éléments de liaison montés de manière mobile autour de l'embout mâle et un manchon tournant de verrouillage qui entoure radialement ces éléments de liaison sur toute leur hauteur axiale et qui coopère en rotation avec eux pour les maintenir dans l'embout femelle par une rotation dans un sens et les en extraire par une rotation en sens inverse.

Un but de la présente invention est de proposer un dispositif de raccordement pour une ligne de transfert de fluide en particulier à basse pression, qui remédie à cet inconvénient et qui comprend :
- un organe de liaison destiné à être monté autour d'un embout tubulaire mâle en étant raccordé à un embout tubulaire femelle par une face radialement interne de ce dernier, l'organe de liaison comprenant une extrémité de raccordement axialement intérieure apte à venir se loger dans une gorge de raccordement de ladite face interne, et
- un organe de verrouillage destiné à être monté autour de l'embout mâle et apte à commander une extrémité de manoeuvre axialement extérieure de l'organe de liaison pour amener réversiblement ladite extrémité de raccordement dans une position de verrouillage dans ladite gorge.

A cet effet, un dispositif selon l'invention est tel que l'organe de liaison forme un levier comprenant, axialement de part et d'autre d'une zone d'appui radialement interne de l'organe de liaison destinée à être montée contre l'embout mâle, ces extrémités de manoeuvre et de raccordement qui sont aptes à basculer dans des directions radiales opposées sous la commande de l'organe de verrouillage, de telle sorte que l'extrémité de raccordement insérée entre l'embout mâle et la gorge soit, dans un premier temps, apte à être positionnée dans cette dernière en basculant radialement vers l'extérieur en réaction à un basculement de l'extrémité de manoeuvre radialement vers l'intérieur et, dans un second temps, apte à être verrouillée dans la gorge selon la position de verrouillage via une retenue de l'extrémité de manoeuvre par l'organe de verrouillage s'opposant au basculement de l'extrémité de raccordement hors de la gorge.

Dans la présente description, on entendra par les expressions « axialement intérieure » ou « axialement vers l'intérieur » une localisation à l'état raccordé selon l'axe de symétrie des embouts mâle et femelle qui est dirigée vers l'intérieur du raccord, i.e. de manière proximale à la gorge de raccordement de l'embout femelle et, inversement, par les expressions « axialement extérieure » ou « axialement vers l'extérieur » une localisation selon cet axe à l'opposé (i.e. de manière distale) de cette gorge.

On notera que cet organe de liaison selon l'invention formant levier permet un positionnement précis de son extrémité de raccordement dans la gorge de l'embout femelle, préalablement à l'opération de verrouillage qui n'est réalisable que dans le cas de la validation de ce positionnement et qui est alors mise en oeuvre via l'actionnement de l'organe de verrouillage au contact de l'extrémité de manoeuvre de l'organe de liaison. On dispose ainsi d'un degré de sécurité supplémentaire par rapport à l'état de l'art antérieur, où la validation de ce positionnement n'est pas requise préalablement au verrouillage.

On notera également que l'organe de liaison n'étant pas en contact avec le fluide, tel qu'un carburant, son matériau constitutif peut être sélectionné pour présenter les caractéristiques mécaniques optimales pour l'effet de levier précité. Avantageusement, cet organe de liaison est réalisé en un matériau plastique apte à être déformé élastiquement comme indiqué ci-dessus.

On notera en outre que l'organe de liaison peut être soit rapporté autour de l'embout mâle, soit formé d'une seule pièce avec ce dernier.

Selon une autre caractéristique de l'invention, ces deux extrémités de manoeuvre et de raccordement, qui forment les deux zones utiles du levier précité, peuvent être respectivement reliées à la zone d'appui par deux tronçons obliques qui s'étendent tous deux radialement vers l'extérieur à partir de cette zone d'appui, et le tronçon oblique se terminant par l'extrémité de raccordement présente avantageusement une épaisseur inférieure à celle de ladite zone d'appui.

Selon un premier mode de réalisation de l'invention, l'organe de verrouillage est apte à retenir directement ladite extrémité de manoeuvre pour s'opposer au basculement de ladite extrémité de raccordement hors de ladite gorge.

Selon une autre caractéristique de ce premier mode de l'invention, ladite extrémité de manoeuvre peut former au moins une rampe apte à guider une extrémité recourbée de verrouillage axialement intérieure de l'organe de verrouillage, sous la commande d'une poussée appliquée à ce dernier vers l'embout femelle, jusqu'à ce que cette extrémité de verrouillage vienne retenir ladite extrémité de manoeuvre par coincement réversible de la ou chaque rampe.

Avantageusement, ladite extrémité de manoeuvre peut présenter une forme pointue axialement vers l'extérieur qui est délimitée par une face radialement externe formée par la ou chaque rampe, laquelle s'étend obliquement radialement vers l'extérieur et axialement vers l'intérieur en épousant dans ladite position de verrouillage une portion oblique de verrouillage de l'organe de verrouillage qui se termine par ladite extrémité de verrouillage, la ou chaque rampe étant conçue pour être emprisonnée au contact de cette portion de verrouillage de préférence par un clipage au contact de cette extrémité de verrouillage.

De préférence, la ou chaque rampe de l'organe de liaison et ladite portion oblique de l'organe de verrouillage présentent chacune une géométrie tronconique.

Selon un exemple préférentiel de réalisation de ce premier mode de l'invention, l'organe de verrouillage présente essentiellement, radialement de l'intérieur vers l'extérieur :
- une portion axiale annulaire radialement interne destinée à être montée au contact de l'embout mâle,
- ladite portion oblique de verrouillage de section radiale annulaire qui se termine par ladite extrémité recourbée de verrouillage axialement intérieure pour l'organe de verrouillage, et
- des moyens de préhension, de préférence au nombre de deux et diamétralement opposés, comprenant chacun une surface d'appui sensiblement radiale pour exercer ladite poussée qui est reliée à ladite portion de verrouillage par une portion de liaison radialement extérieure et sensiblement axiale.

Selon un second mode de réalisation de l'invention, l'organe de verrouillage est apte à retenir indirectement ladite extrémité de manoeuvre pour s'opposer au basculement de ladite extrémité de raccordement hors de ladite gorge, par un coincement axial de l'organe de verrouillage sous au moins une saillie radiale de l'embout mâle. La ou chaque saillie radiale peut être avantageusement formée d'une dent de retenue qui prolonge radialement vers l'extérieur une surface d'appui de l'embout mâle et sous laquelle est apte à venir se cliper une languette de l'organe de verrouillage prolongeant des moyens de préhension de ce dernier.

En relation tant avec ledit premier mode qu'avec ledit second mode de l'invention, l'organe de verrouillage peut avantageusement incorporer en outre un témoin visuel de verrouillage qui est respectivement visible et invisible sur l'embout mâle dans les positions non verrouillée et de verrouillage et qui comporte de préférence au moins un pion axial formé d'un seul tenant avec l'organe de verrouillage et mobile en translation à l'intérieur d'un logement débouchant sur la surface d'appui de l'embout mâle.

Egalement à titre d'exemple selon l'invention, vues en section radiale, ladite extrémité de manoeuvre peut être formée par au moins deux sections de manoeuvre en arc de cercle circonférentiellement espacées entre elles, et ladite extrémité de raccordement peut être formée par au moins deux sections de raccordement en arc de cercle circonférentiellement espacées entre elles de la même manière que lesdites sections de manoeuvre, une bague axialement centrale pour l'organe de liaison formant ladite zone d'appui pour le levier correspondant, les sections de manoeuvre et les sections de raccordement s'étendant radialement vers l'extérieur à partir de cette bague.

On notera que cette bague de l'organe de liaison présente avantageusement une épaisseur réduite pour permettre la déformation élastique du levier formé par cet organe de liaison.

Avantageusement, ladite extrémité de raccordement présente une face radialement externe de forme convexe sensiblement en arc de cercle selon un rayon de courbure correspondant à celui de la gorge de raccordement, et une face radialement interne par exemple de forme sensiblement plate.

Selon un autre aspect de l'invention, ce dispositif de raccordement incorpore l'embout mâle, sur lequel sont montés coaxialement l'organe de liaison et l'organe de verrouillage, et l'embout femelle, dans la gorge de raccordement duquel est montée ladite extrémité de raccordement.

Selon un mode particulier de réalisation de l'invention, peut être formée sur l'embout mâle une excroissance radiale circonférentielle formant une butée axiale contre laquelle est destinée à être montée ladite zone d'appui de l'organe de liaison, pour faciliter le positionnement de ce dernier dans l'embout femelle.

Selon une autre caractéristique de l'invention, ce dispositif de raccordement comprend en outre un joint d'étanchéité sensiblement torique qui est monté ou surmoulé dans une gorge d'étanchéité de l'embout mâle et qui est destiné à être appliqué contre l'embout femelle axialement vers l'intérieur de ladite gorge de raccordement.

Un circuit de retour d'injecteur de carburant selon l'invention comporte un embout tubulaire mâle raccordé à un embout tubulaire femelle par un dispositif de raccordement selon l'invention tel que défini ci-dessus.

Le procédé de montage/ démontage du dispositif selon l'invention tel que défini ci-dessus, autour d'un embout tubulaire mâle et dans un embout tubulaire femelle à raccorder à cet embout mâle, comprend les étapes successives suivantes pour le montage du dispositif :
a) on positionne l'organe de verrouillage et l'organe de liaison autour de l'embout mâle, de telle manière que cet organe de verrouillage soit monté au contact de ladite extrémité de manoeuvre, et que ladite extrémité de raccordement soit située à l'entrée de l'embout femelle, l'organe de liaison étant monté solidaire de l'embout mâle,
b) on exerce un effort relatif de rapprochement entre l'embout mâle dont est solidaire l'organe de liaison et l'embout femelle, de telle manière que l'organe de liaison vienne s'insérer par son extrémité de raccordement radialement entre l'embout mâle et l'embout femelle et au moins partiellement en regard de ladite gorge de raccordement, puis que ladite extrémité de verrouillage exerce une force de compression radiale sur ladite extrémité de manoeuvre se traduisant par une force de basculement radialement vers l'extérieur de ladite extrémité de raccordement, laquelle vient alors se positionner dans la gorge de raccordement, puis
c) on pousse l'organe de verrouillage vers l'embout femelle, de manière que l'organe de verrouillage vienne retenir en butée radiale ladite extrémité de manoeuvre, pour que ladite extrémité de raccordement demeure positionnée dans ladite gorge dans une position de verrouillage du fait de ladite force de basculement.

Selon ledit premier mode de l'invention, ce procédé peut être tel que :
- dans l'étape a), une extrémité recourbée de verrouillage axialement inférieure de l'organe de verrouillage est montée en contact glissant avec au moins une rampe de ladite extrémité de manoeuvre,
- à l'étape b), ladite extrémité de verrouillage exerce par l'intermédiaire de la ou chaque rampe une force de compression radiale sur ladite extrémité de manoeuvre se traduisant par ladite force de basculement, et que
- à l'étape c), ladite extrémité recourbée de verrouillage vient retenir en butée radiale ladite extrémité de manoeuvre.

Selon ledit second mode de l'invention, ce procédé peut être tel qu'à l'étape c), on vient coincer axialement en translation l'organe de verrouillage sous au moins une saillie radiale de l'embout mâle, de préférence par clipage d'une languette de l'organe de verrouillage sous une dent de retenue de l'embout mâle.

On notera à nouveau que selon l'invention, il n'est pas possible de manoeuvrer l'organe de verrouillage comme indiqué à l'étape c) sans avoir au préalable correctement positionné à l'étape b) l'organe de liaison dans la gorge de raccordement de l'embout femelle.

Selon une autre caractéristique de l'invention, l'on met avantageusement en oeuvre :
- l'étape a) en montant successivement autour de l'embout mâle l'organe de verrouillage puis l'organe de liaison, pour rendre l'organe de liaison solidaire en translation et en rotation de l'embout mâle, et
- l'étape b) en exerçant sur une surface d'appui de cet embout mâle un effort de translation axialement vers l'embout femelle.

En variante, on notera à nouveau que l'organe de liaison pourrait être formé d'une seule pièce avec l'embout mâle.

Avantageusement, l'on peut mettre en oeuvre l'étape c) en exerçant sur au moins une surface d'appui de l'organe de verrouillage un effort de translation axialement vers l'embout femelle, pour venir cliper cet organe soit sur ladite extrémité de manoeuvre, soit sur l'embout mâle.

Egalement avantageusement, le procédé selon l'invention comprend en outre les étapes successives suivantes pour le démontage du dispositif :
d) on comprime radialement par pincement une portion de liaison radialement extérieure de l'organe de verrouillage et l'on exerce un effort de traction axialement vers l'extérieur sur l'organe de verrouillage, de manière à désengager ladite extrémité de manoeuvre de l'organe de verrouillage, puis
e) on exerce un effort de traction axialement vers l'extérieur sur l'embout mâle pour extraire hors de ladite gorge de raccordement ladite extrémité de raccordement de l'organe de liaison, par un basculement radialement vers l'intérieur de ladite extrémité de raccordement en réponse à la détente radialement vers l'extérieur de ladite extrémité de manoeuvre.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue partielle en coupe axiale d'un embout femelle dans lequel est destiné à être monté un dispositif de raccordement selon l'invention,
les figures 2 et 3 sont respectivement des vues en perspective, à des échelles différentes, de deux organes de verrouillage et de liaison selon un exemple de l'invention qui sont destinés à être montés autour d'un embout mâle pour sa connexion à l'embout femelle de la figure 1,
la figure 4 est une vue en perspective de cet embout mâle sur lequel sont montés les organes de verrouillage et de liaison des figures 2 et 3 formant un dispositif de raccordement selon l'invention,
la figure 5 est une vue schématique en demi-coupe axiale du dispositif de raccordement de la figure 4 monté sur l'embout mâle et dans une position de raccordement à l'embout femelle,
la figure 6 est une vue schématique partielle en demi-coupe axiale du dispositif de raccordement de la figure 4 monté sur l'embout mâle, avant montage dans l'embout femelle,
la figure 7 est une vue schématique partielle en demi-coupe axiale du dispositif de la figure 6 montrant une phase intermédiaire du montage dans l'embout femelle,
la figure 8 est une vue schématique partielle en demi-coupe axiale du dispositif de la figure 7 montrant une phase finale de montage dans l'embout femelle, dans une position de raccordement non verrouillée,
la figure 9 est une vue schématique partielle en demi-coupe axiale du dispositif de la figure 8 dans une position ultérieure de verrouillage dans l'embout femelle,
la figure 10 est une vue schématique partielle en demi-coupe axiale du dispositif de la figure 9 montrant une phase intermédiaire de déverrouillage ultérieur de ce dispositif vis-à-vis de l'embout femelle,
la figure 11 est une vue schématique partielle en demi-coupe axiale du dispositif de la figure 10 montrant une phase finale de déverrouillage de ce dispositif vis-à-vis de l'embout femelle,
la figure 12 est une vue schématique en coupe axiale et partiellement en perspective d'un autre dispositif de raccordement selon l'invention correspondant à une variante des figures 4 et 5, monté sur l'embout mâle dans une position verrouillée, et
les figures 13 et 14 sont deux vues en perspective de l'embout mâle équipé du dispositif de raccordement selon la figure 12, respectivement dans une position verrouillée et non verrouillée.

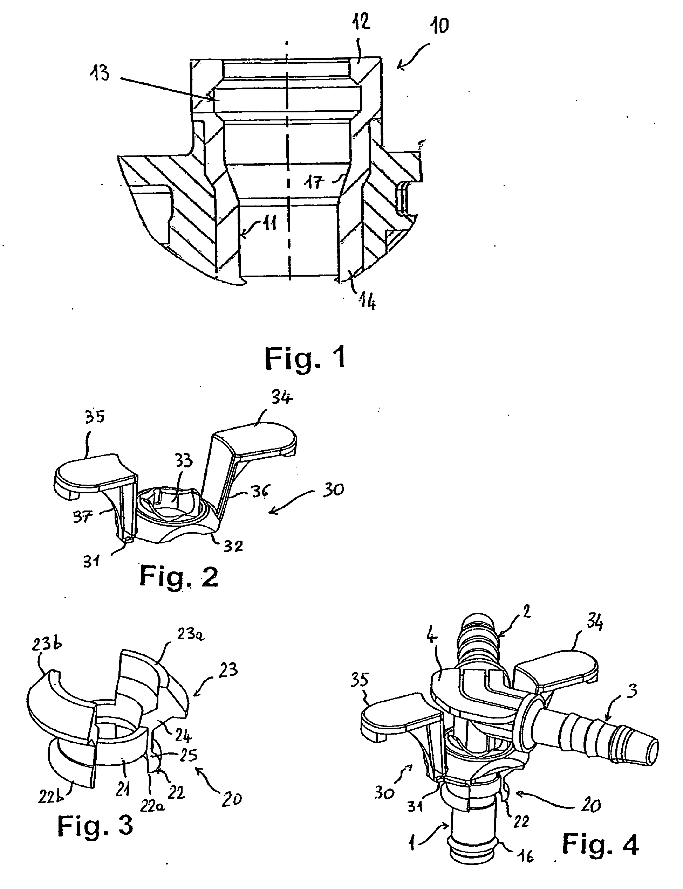

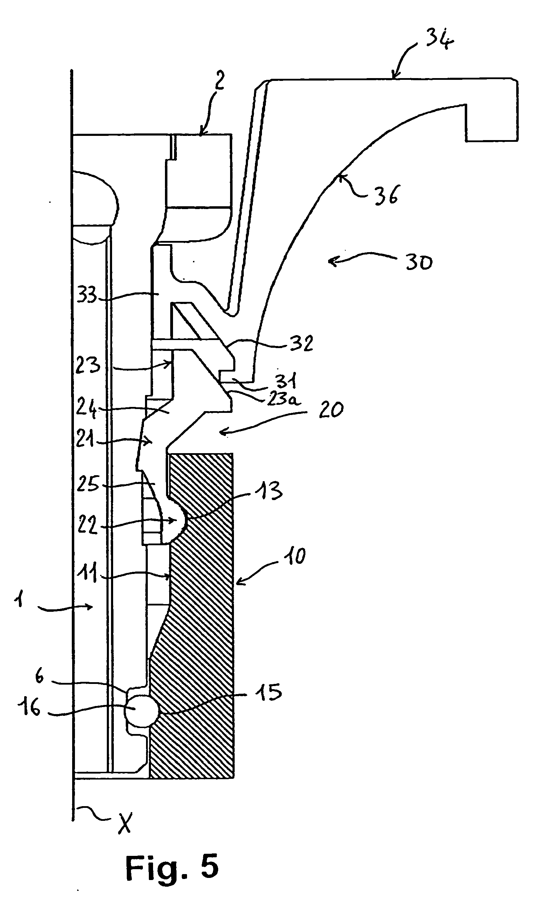

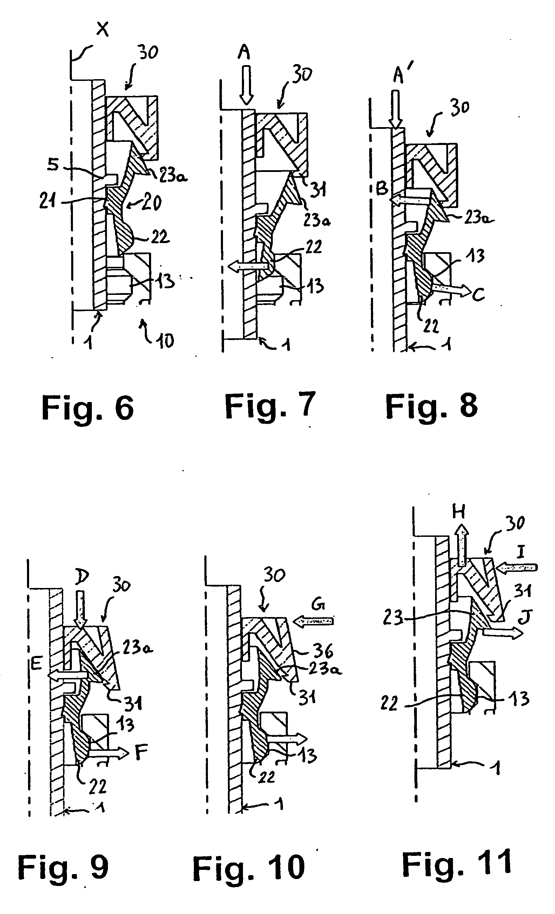

L'embout tubulaire mâle 1 illustré notamment aux figures 4 et 5 présente de manière connue, en son extrémité axialement extérieure, deux raccords de branchement 2 et 3 en forme de queues de sapin qui s'étendent symétriquement l'un de l'autre par rapport à une surface d'appui 4 pour l'opérateur que présente cet embout 1 et qui est centrée sur l'axe X de ce dernier (voir figure 4). L'embout 1 peut présenter optionnellement par ailleurs une excroissance radiale circonférentielle 5 (voir figure 6), dont l'utilité sera précisée ci-après.

L'embout tubulaire femelle 10 illustré à la figure 1, de type canule et de forme standard, présente essentiellement sur sa face radialement interne 11, à proximité immédiate de son extrémité axialement supérieure 12, une gorge circonférentielle de raccordement 13 qui est de section axiale sensiblement trapézoïdale et qui est destinée à recevoir une extrémité de raccordement 21 d'un organe de liaison 20 illustré aux figures 3 et suivantes. L'embout femelle 10 présente en outre, à proximité immédiate de son extrémité axialement intérieure 14, une zone circonférentielle d'étanchéité 15 (visible à la figure 5) destinée à recevoir un joint torique d'étanchéité 16 (visible seulement à la figure 5 à l'état non comprimé) qui est préalablement monté ou surmoulé dans une gorge circonférentielle d'étanchéité 6 de l'embout mâle 1. De manière connue, la section interne de cet embout femelle 10 présente un rétrécissement 17 axialement en dessous de la gorge 13.

L'organe de liaison 20 visible à la figure 3 est réalisé en un matériau plastique et comprend, axialement de part et d'autre d'une zone d'appui 21 radialement interne destinée à être montée contre l'embout 1 :
- une extrémité de raccordement 22 axialement intérieure présentant une face radialement externe de forme convexe apte à se positionner dans la gorge 13, et une face radialement interne de forme sensiblement plate pour permettre l'insertion de cette extrémité 22 entre les embouts mâle 1 et femelle 10 ; et
- une extrémité de manoeuvre 23 axialement extérieure conçue pour être commandée par l'organe de verrouillage 30 (voir figure 2) pour amener réversiblement l'extrémité de raccordement 22 dans une position de verrouillage dans la gorge 13.

Les extrémités de manoeuvre 23 et de raccordement 22 sont respectivement reliées à la zone d'appui 21 par deux tronçons obliques 24 et 25 s'étendant radialement vers l'extérieur à partir de cette zone d'appui 21.

Si l'on considère l'organe de liaison 20 de la figure 3 en section radiale, l'extrémité de manoeuvre 23 est formée, dans cet exemple de réalisation, par deux sections de manoeuvre 23a et 23b en arc de cercle circonférentiellement espacées entre elles et chacune en forme de rampe tronconique apte à guider une extrémité annulaire et recourbée de verrouillage 31 axialement intérieure de l'organe de verrouillage 30, sous la commande d'une poussée appliquée à ce dernier vers l'embout femelle 10 jusqu'à ce que cette extrémité de verrouillage 31 vienne retenir les sections de manoeuvre 23a et 23b par coincement réversible de chaque rampe. Quant à l'extrémité de raccordement 22, elle est formée par deux sections de raccordement 22a et 22b en arc de cercle circonférentiellement espacées entre elles de la même manière, une bague axialement centrale pour l'organe de liaison 20 formant la zone d'appui 21 et les paires de sections de manoeuvre 23a, 23b et de raccordement 22a, 22b s'étendant radialement vers l'extérieur à partir de cette bague 21.

Plus précisément, on voit à la figure 5 que chaque section de manoeuvre 23a présente une forme pointue axialement vers l'extérieur qui est délimitée par une face radialement externe formée par la rampe correspondante, laquelle s'étend obliquement radialement vers l'extérieur et axialement vers l'intérieur en épousant dans la position de verrouillage une portion oblique tronconique de verrouillage 32 de l'organe de verrouillage 30 qui se termine par l'extrémité de verrouillage 31. Chaque rampe 23a est conçue pour être emprisonnée au contact de la portion de verrouillage 32 par un clipage au contact de l'extrémité de verrouillage 31.

Selon l'invention, l'organe de liaison 20 forme ainsi un levier comprenant ces extrémités de manoeuvre 23 et de raccordement 22 qui sont aptes à basculer dans des directions radiales opposées sous la commande de l'organe de verrouillage 30, comme sera expliqué ci-après.

Comme illustré à la figure 2, l'organe de verrouillage 30 est destiné à être monté autour de l'embout mâle 1 et, selon l'invention, cet organe 30 est apte à commander l'organe de liaison 20 pour amener réversiblement l'extrémité de raccordement 22 dans une position de verrouillage dans la gorge 13. Plus précisément, l'organe de verrouillage 30 présente dans cet exemple de réalisation, radialement de l'intérieur vers l'extérieur :
- une portion axiale annulaire radialement interne 33 destinée à être montée au contact de l'embout mâle 1,
- la portion oblique tronconique de verrouillage 32 qui se termine par l'extrémité de verrouillage 31, et
- deux surfaces d'appui radiales 34 et 35 diamétralement opposées pour permettre à l'opérateur d'exercer la poussée précitée, qui sont reliées à la portion de verrouillage 32 par deux portions de liaison 36 et 37 radialement extérieures et sensiblement axiales.

Comme illustré aux figures 6 à 9, on procède de la manière suivante pour réaliser et verrouiller le raccordement de l'organe de liaison 20 dans la gorge 13 de l'embout femelle 10 :
- on positionne l'organe de verrouillage 30 puis l'organe de liaison 20 autour de l'embout mâle 1 (via l'excroissance radiale circonférentielle 5 pour l'organe 20), de manière que l'extrémité de verrouillage 31 de l'organe de verrouillage 30 soit montée en contact glissant avec chaque rampe 23a, 23b de l'extrémité de manoeuvre 23 en la surmontant (i.e. axialement vers l'extérieur), et que l'extrémité de raccordement 22 soit située à l'entrée de l'embout femelle 10, l'organe de liaison 20 étant monté solidaire en translation et en rotation de l'embout mâle 1, ce qui correspond à la position de départ de la figure 6 ;
- on exerce ensuite une poussée axiale sur la surface d'appui 4 de l'embout mâle 1 (voir flèche A de la figure 7), pour que l'organe de liaison 20 vienne s'insérer par son extrémité de raccordement 22 entre les embouts mâle 1 et femelle 10 et à l'entrée de la gorge 13 ; puis
- on maintient cette poussée (voir flèche A' à la figure 8) pour que l'extrémité de verrouillage 31 exerce par l'intermédiaire de chaque rampe 23a, 23b une force de compression radiale (voir flèche B à la figure 8) sur l'extrémité de manoeuvre 23 se traduisant par une force de basculement radialement vers l'extérieur de l'extrémité de raccordement 22 (voir flèche C à cette figure 8), laquelle vient alors se positionner dans la gorge 13 ; puis
- on pousse axialement l'organe de verrouillage 30 vers l'embout femelle 10 (voir flèche D à la figure 9), de manière que l'extrémité de verrouillage 31 vienne se cliper autour et axialement à l'intérieur d'une base de chaque rampe 23a, 23b, pour que l'extrémité de raccordement 22 demeure positionnée dans la gorge 13 dans une position de verrouillage où l'organe de liaison 20 est contraint à ne plus se déformer du fait de la force de basculement précitée (voir flèches E et F à cette figure 9 correspondant respectivement aux efforts appliqués radialement vers l'intérieur pour l'extrémité de manoeuvre 23 et vers l'extérieur pour l'extrémité de raccordement 22).

Comme illustré aux figures 10 et 11, on procède ensuite de la manière suivante pour déverrouiller le raccordement de l'organe de liaison 20 dans la gorge 13 de l'embout femelle 10 :
- on comprime radialement par pincement (voir flèche G à la figure 10) une partie haute (i.e. zone axialement extérieure) de la portion de liaison 36 de l'organe de verrouillage 30, de manière à désengager chaque rampe 23a, 23b de l'extrémité de verrouillage 31 ;
- on exerce ensuite un effort de traction axialement vers l'extérieur (voir flèche H à la figure 11) sur l'organe de verrouillage 30 tout en maintenant cet effort de pincement radial (voir flèche I à la figure 11), ce qui a pour effet de désengager l'extrémité de manoeuvre 23 de l'organe de verrouillage 30 (voir la flèche J de détente radiale à cette figure 11), puis
- on exerce enfin un effort de traction axialement vers l'extérieur sur l'embout mâle 1 pour extraire hors de la gorge 13 l'extrémité de raccordement 22 de l'organe de liaison 20, par un basculement radialement vers l'intérieur (non illustré) de cette extrémité 22 en réponse à la détente radialement vers l'extérieur de l'extrémité de manoeuvre 23.

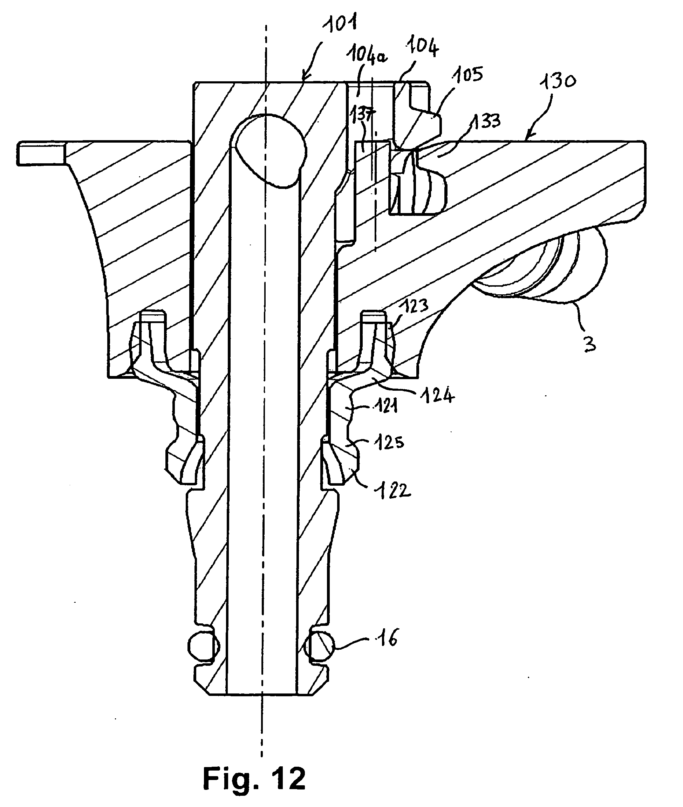

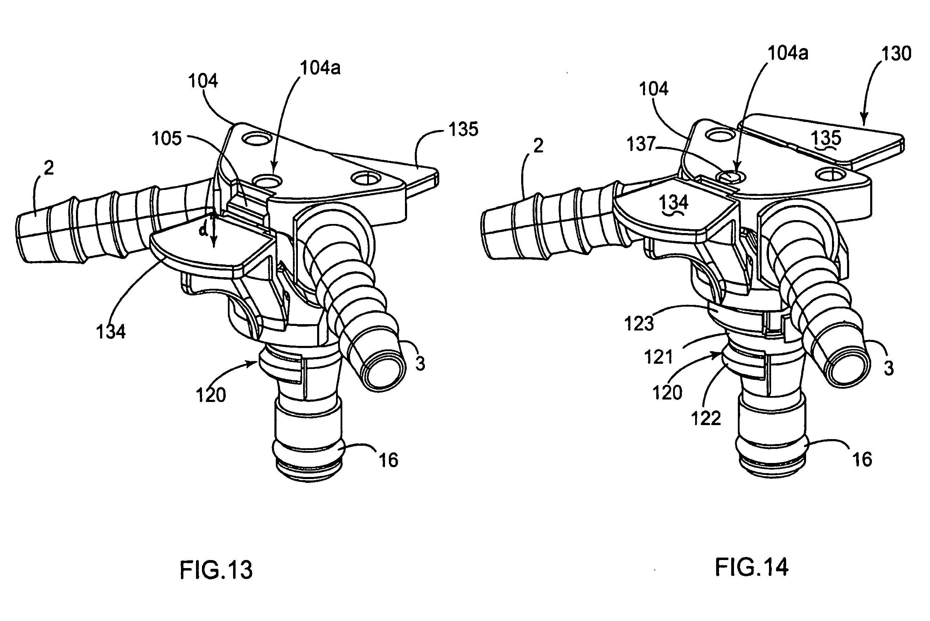

Le dispositif de raccordement illustré selon la variante des figures 12 à 14 se différencie essentiellement de celui précité notamment en relation avec les figures 4 et 5, en ce que :
- l'organe de verrouillage 130 est apte à retenir non pas directement, mais indirectement l'extrémité de manoeuvre 123 de l'organe de liaison 120 pour s'opposer au basculement de l'extrémité de raccordement 122 de ce dernier hors de la gorge 13, par un coincement axial réversible d'une languette 133 axialement extérieure de l'organe 130 qui s'étend radialement vers l'intérieur en prolongeant l'une de ses deux surfaces d'appui 134, 135 et qui se clipe sous une dent de retenue 105 de l'embout mâle 101, laquelle dent 105 prolonge radialement vers l'extérieur la surface d'appui 104 de l'embout 101 ;
- cet organe 130 incorpore un témoin visuel de verrouillage 137, qui est visible sur l'embout mâle 101 dans la position non verrouillée de la figure 14 et invisible sur cet embout 101 dans la position de verrouillage des figures 12 et 13 et qui est constitué dans cet exemple d'un pion axial 137 formé d'un seul tenant avec l'organe 130 radialement à l'intérieur de la languette 133, ce pion 137 étant mobile en translation axiale à l'intérieur d'un logement traversant de l'embout 101 débouchant sur sa surface d'appui 104; et en ce que
- l'organe de liaison 120, qui fonctionne à la manière d'un levier à l'instar de l'organe 20 précité, a son extrémité de raccordement 122 sensiblement inchangée par rapport à celle 22 de l'organe 20 mais a son extrémité opposée de manoeuvre 123 qui est dépourvue de la rampe 23a coopérant avec la portion oblique de verrouillage 32 et le crochet 31 la terminant, en raison du verrouillage obtenu ici par le clipage précité de l'organe 130 sous la dent 105 de l'embout 101 (les tronçons obliques 124 et 125 de l'organe 120 sont visibles à la figure 12).

On notera que le pion 137 de visualisation du verrouillage présente avantageusement une couleur très différente de celle du reste de l'organe de verrouillage 130, ce contraste facilitant la visualisation par un opérateur de la position déverrouillée où ce pion 137 affleure à la surface sommitale d'appui 104 de l'embout mâle 101 (voir figure 14). Dans la position de verrouillage visible aux figures 12 et 13 qui est obtenue en appuyant vers le bas sur l'organe 130, le pion 137 est enfoncé (i.e. en retrait axialement vers l'intérieur) par rapport à cette surface 104 du fait du clipage de la languette 133 sous la dent 105, étant ainsi invisible pour l'opérateur. La course axiale d nécessaire à l'obtention de cette position de verrouillage est par exemple comprise entre 2,5 mm et 3 mm.

En résumé et comme indiqué ci-dessus, il convient de noter que la coopération entre les organes de liaison 20, 120 et de verrouillage 30, 130 selon l'invention permet de verrouiller réversiblement et aisément l'embout mâle 1, 101 dans l'embout femelle 10, seulement si l'organe de liaison 20, 120 a été correctement positionné dans la gorge 13 de cet embout 10, ce qui garantit doublement ce positionnement en comparaison des dispositifs de raccordement connus ne requérant pas la validation de ce positionnement comme condition préalable au verrouillage.

## Revendications

1. Dispositif de raccordement pour une ligne de transfert de fluide en particulier à basse pression, comprenant :
- un organe de liaison (20, 120) destiné à être monté autour d'un embout tubulaire mâle (1, 101) en étant raccordé à un embout tubulaire femelle (10) par une face radialement interne (11) de ce dernier, l'organe de liaison comprenant une extrémité de raccordement (22, 122) axialement intérieure apte à venir se loger dans une gorge de raccordement (13) de ladite face interne, et
- un organe de verrouillage (30, 130) qui est destiné à être monté autour de l'embout mâle et qui est apte à commander une extrémité de manoeuvre (23, 123) axialement extérieure de l'organe de liaison pour amener réversiblement ladite extrémité de raccordement dans une position de verrouillage dans ladite gorge,
**caractérisé en ce que** l'organe de liaison forme un levier comprenant, axialement de part et d'autre d'une zone d'appui (21, 121) radialement interne de l'organe de liaison destinée à être montée contre l'embout mâle, lesdites extrémités de manoeuvre et de raccordement qui sont aptes à basculer dans des directions radiales opposées sous la commande de l'organe de verrouillage, de telle sorte que ladite extrémité de raccordement insérée entre l'embout mâle et ladite gorge soit, dans un premier temps, apte à être positionnée dans cette dernière en basculant radialement vers l'extérieur en réaction à un basculement de ladite extrémité de manoeuvre radialement vers l'intérieur et, dans un second temps, apte à être verrouillée dans ladite gorge selon ladite position de verrouillage via une retenue de ladite extrémité de manoeuvre par l'organe de verrouillage s'opposant au basculement de ladite extrémité de raccordement hors de ladite gorge.

2. Dispositif de raccordement selon la revendication 1, **caractérisé en ce que** lesdites extrémités de manoeuvre (23, 123) et de raccordement (22, 122) sont respectivement reliées à ladite zone d'appui (21, 121) par deux tronçons obliques (24 et 25, 124 et 125) qui s'étendent tous deux radialement vers l'extérieur à partir de cette zone d'appui, ledit tronçon oblique (25, 125) se terminant par ladite extrémité de raccordement (22, 122) qui présente de préférence une épaisseur inférieure à celle de ladite zone d'appui (21, 121).

3. Dispositif de raccordement selon la revendication 1 ou 2, **caractérisé en ce que** l'organe de verrouillage (30) est apte à retenir directement ladite extrémité de manoeuvre (23) pour s'opposer au basculement de ladite extrémité de raccordement (22) hors de ladite gorge (13).

4. Dispositif de raccordement selon une des revendications précédentes, **caractérisé en ce que** ladite extrémité de manoeuvre (23) forme au moins une rampe (23a, 23b) apte à guider une extrémité recourbée de verrouillage (31) axialement intérieure de l'organe de verrouillage (30), sous la commande d'une poussée appliquée à ce dernier vers l'embout femelle (10), jusqu'à ce que cette extrémité de verrouillage (31) vienne retenir ladite extrémité de manoeuvre (23) par coincement réversible de la ou chaque rampe.

5. Dispositif de raccordement selon la revendication 4, **caractérisé en ce que** ladite extrémité de manoeuvre (23) présente une forme pointue axialement vers l'extérieur qui est délimitée par une face radialement externe formée par la ou chaque rampe (23a, 23b), laquelle s'étend obliquement radialement vers l'extérieur et axialement vers l'intérieur en épousant dans ladite position de verrouillage une portion oblique de verrouillage (32) de l'organe de verrouillage (30) qui se termine par ladite extrémité de verrouillage (31), la ou chaque rampe étant conçue pour être emprisonnée au contact de cette portion de verrouillage par un clipage au contact de cette extrémité de verrouillage.

6. Dispositif de raccordement selon la revendication 5, **caractérisé en ce que** l'organe de verrouillage (30) présente essentiellement, radialement de l'intérieur vers l'extérieur :
- une portion axiale annulaire (33) radialement interne destinée à être montée au contact de l'embout mâle (1),
- ladite portion oblique de verrouillage (32) de section radiale annulaire qui se termine par ladite extrémité recourbée de verrouillage (31) axialement intérieure pour l'organe de verrouillage, et
- des moyens de préhension (34, 35), de préférence au nombre de deux et diamétralement opposés, comprenant chacun une surface d'appui sensiblement radiale pour exercer ladite poussée qui est reliée à ladite portion de verrouillage par une portion de liaison (36) radialement extérieure et sensiblement axiale.

7. Dispositif de raccordement selon la revendication 1 ou 2, **caractérisé en ce que** l'organe de verrouillage (130) est apte à retenir indirectement ladite extrémité de manoeuvre (123) pour s'opposer au basculement de ladite extrémité de raccordement (122) hors de ladite gorge (13), par un coincement axial de l'organe de verrouillage sous au moins une saillie radiale (105) de l'embout mâle (101).

8. Dispositif de raccordement selon la revendication 7, **caractérisé en ce que** ladite ou chaque saillie radiale (105) est formée d'une dent de retenue qui prolonge radialement vers l'extérieur une surface d'appui (104) de l'embout mâle (101) et sous laquelle est apte à venir se cliper une languette (133) prolongeant des moyens de préhension (134) de l'organe de verrouillage (130).

9. Dispositif de raccordement selon une des revendications précédentes, **caractérisée en ce que** l'organe de verrouillage (130) incorpore en outre un témoin visuel de verrouillage (137) qui est respectivement visible et invisible sur l'embout mâle (101) dans les positions non verrouillée et de verrouillage et qui comporte de préférence au moins un pion axial (137) formé d'un seul tenant avec l'organe de verrouillage et mobile en translation à l'intérieur d'un logement débouchant sur une surface d'appui (104) de l'embout mâle.

10. Dispositif de raccordement selon une des revendications précédentes, **caractérisé en ce que**, vues en section radiale, ladite extrémité de manoeuvre (23, 123) est formée par au moins deux sections de manoeuvre (23a et 23b) en arc de cercle circonférentiellement espacées entre elles, et **en ce que** ladite extrémité de raccordement (22, 122) est formée par au moins deux sections de raccordement (22a et 22b) en arc de cercle circonférentiellement espacées entre elles de la même manière que lesdites sections de manoeuvre, une bague axialement centrale pour l'organe de liaison (20, 120) formant ladite zone d'appui (21, 121) pour le levier correspondant, ces sections de manoeuvre et de raccordement s'étendant radialement vers l'extérieur à partir de cette bague.

11. Dispositif de raccordement selon une des revendications précédentes, **caractérisé en ce que** ladite extrémité de raccordement (22, 122) présente une face radialement externe de forme convexe sensiblement en arc de cercle selon un rayon de courbure correspondant à celui de ladite gorge de raccordement (13), et une face radialement interne de forme sensiblement plate.

12. Dispositif de raccordement selon une des revendications précédentes, **caractérisé en ce qu'**il est pourvu de l'embout mâle (1, 101), sur lequel sont montés coaxialement l'organe de liaison (20, 120) et l'organe de verrouillage (30, 130), et de l'embout femelle (10), dans la gorge de raccordement (13) duquel est montée ladite extrémité de raccordement (22, 122).

13. Dispositif de raccordement selon la revendication 12, **caractérisé en ce qu'**est formée sur l'embout mâle (1) une excroissance radiale circonférentielle (5) formant une butée axiale contre laquelle est destinée à être montée ladite zone d'appui (21) de l'organe de liaison (20), pour faciliter le positionnement de ce dernier dans l'embout femelle (10).

14. Dispositif de raccordement selon la revendication 12 ou 13, **caractérisé en ce qu'**il comprend en outre un joint d'étanchéité (16) sensiblement torique qui est monté ou surmoulé dans une gorge d'étanchéité (6) de l'embout mâle (1, 101) et qui est destiné à être appliqué contre l'embout femelle (10) axialement vers l'intérieur de ladite gorge de raccordement (13).

15. Circuit de retour d'injecteur de carburant comportant un embout tubulaire mâle (1, 101) raccordé à un embout tubulaire femelle (10) par un dispositif de raccordement, **caractérisé en ce que** ce dispositif est tel que défini à l'une des revendications précédentes.

16. Procédé de montage/ démontage d'un dispositif de raccordement selon une des revendications 1 à 14, autour d'un embout tubulaire mâle (1, 101) et dans un embout tubulaire femelle (10) à raccorder à cet embout mâle, **caractérisé en ce qu'**il comprend les étapes successives suivantes pour le montage du dispositif :
a) on positionne l'organe de verrouillage (30, 130) et l'organe de liaison (20, 120) autour de l'embout mâle, de telle manière que cet organe de verrouillage soit monté au contact de ladite extrémité de manoeuvre (23, 123), et que ladite extrémité de raccordement (22, 122) soit située à l'entrée de l'embout femelle, l'organe de liaison étant monté solidaire de l'embout mâle,
b) on exerce un effort relatif de rapprochement (A, A') entre l'embout mâle dont est solidaire l'organe de liaison et l'embout femelle, de telle manière que l'organe de liaison vienne s'insérer par son extrémité de raccordement radialement entre l'embout mâle et l'embout femelle et au moins partiellement en regard de ladite gorge de raccordement (13), puis que ladite extrémité de verrouillage exerce une force de compression radiale (B) sur ladite extrémité de manoeuvre se traduisant par une force de basculement radialement vers l'extérieur (C) de ladite extrémité de raccordement, laquelle vient alors se positionner dans ladite gorge de raccordement, puis
c) on pousse l'organe de verrouillage vers l'embout femelle, de manière que l'organe de verrouillage vienne retenir en butée radiale ladite extrémité de manoeuvre, pour que ladite extrémité de raccordement demeure positionnée dans ladite gorge dans une position de verrouillage du fait de ladite force de basculement (F).

17. Procédé de montage/ démontage selon la revendication 16, **caractérisé en ce que** :
- dans l'étape a), une extrémité recourbée de verrouillage (31) axialement inférieure de l'organe de verrouillage est montée en contact glissant avec au moins une rampe (23a, 23b) de ladite extrémité de manoeuvre (23),
- à l'étape b), ladite extrémité de verrouillage exerce par l'intermédiaire de la ou chaque rampe une force de compression radiale (B) sur ladite extrémité de manoeuvre se traduisant par ladite force de basculement, et **en ce que**
- à l'étape c), ladite extrémité recourbée de verrouillage vient retenir en butée radiale ladite extrémité de manoeuvre.

18. Procédé de montage/ démontage selon la revendication 16, **caractérisé en ce qu'**à l'étape c), on vient coincer axialement en translation l'organe de verrouillage (130) sous au moins une saillie radiale (105) de l'embout mâle (101), de préférence par clipage d'une languette (133) de cet organe sous une dent de retenue (105) de l'embout mâle (101).

19. Procédé de montage/ démontage selon une des revendications 16 à 18, **caractérisé en ce que** l'on met en oeuvre :
- l'étape a) en montant successivement autour de l'embout mâle (1) l'organe de verrouillage (30) puis l'organe de liaison (20), pour rendre l'organe de liaison (20) solidaire en translation et en rotation de l'embout mâle, et
- l'étape b) en exerçant sur une surface d'appui (4) de cet embout mâle un effort de translation axialement vers l'embout femelle (10).

20. Procédé de montage/ démontage selon une des revendications 16 à 19, **caractérisé en ce que** l'on met en oeuvre l'étape c) en exerçant sur au moins une surface d'appui (34, 35 ou 134, 135) de l'organe de verrouillage (30, 130) un effort de translation axialement vers l'embout femelle (10), pour cliper cet organe soit sur ladite extrémité de manoeuvre (23), soit sur l'embout mâle (101).

21. Procédé de montage/ démontage selon une des revendications 16 à 20, **caractérisé en ce qu'**il comprend en outre les étapes successives suivantes pour le démontage du dispositif :
d) on comprime radialement par pincement (G) une portion de liaison radialement extérieure (36) de l'organe de verrouillage (30, 130) et l'on exerce un effort de traction axialement vers l'extérieur (H) sur cet organe de manière à désengager ladite extrémité de manoeuvre (23, 123) de l'organe de verrouillage, puis
e) on exerce un effort de traction axialement vers l'extérieur sur l'embout mâle (1) pour extraire hors de ladite gorge de raccordement (13) ladite extrémité de raccordement (22, 122), par un basculement radialement vers l'intérieur de cette dernière en réponse à la détente radialement vers l'extérieur (J) de ladite extrémité de manoeuvre.

## Claims

1. Connecting device for a fluid transfer line, in particular at low pressure, comprising:
- a connecting element (20, 120) designed to be mounted around a male tubular fitting (1, 101) connected to a female tubular fitting (10) by a radially internal face (11) of the latter, the connecting element having an axially inner connecting end (22, 122) designed to be located in a connecting groove (13) of said internal face, and
- a locking element (30, 130) which is designed to be mounted around the male fitting and which is designed to control an axially outer manipulating end (23, 123) of the connecting element so as to reversibly move said connecting end into a position locked in said groove,
**characterised in that** the connecting element acts as a lever comprising said manipulating and connecting ends axially on either side of a radially inner support zone (21, 121) of the connecting element designed to be mounted against the male fitting, which ends are designed to tilt in opposite radial directions under the control of the locking element so that said connecting end inserted between the male fitting and said groove is, in the first instance, able to be positioned inside the latter by a tilting movement radially towards the exterior in response to a tilting movement of said manipulating end radially towards the interior and, in the second instance, able to be locked in said groove in said locked position via a retaining of said manipulating end by the locking element opposing the tilting movement of said connecting end out of said groove.

2. Connecting device as claimed in claim 1, **characterised in that** said manipulating (23, 123) and connecting (22, 122) ends are respectively connected to said support zone (21, 121) by two oblique portions (24 and 25, 124 and 125), both of which extend radially towards the exterior from this support zone, said oblique portion (25, 125) being terminated by said connecting end (22, 122), which preferably has a smaller thickness than that of said support zone (21, 121).

3. Connecting device as claimed in claim 1 or 2, **characterised in that** the locking element (30) is designed to retain said manipulating end (23) directly in order to oppose the tilting movement of said connecting end (22) out of said groove (13).

4. Connecting device as claimed in one of the preceding claims, **characterised in that** said manipulating end (23) forms at least one ramp (23a, 23b) designed to guide an axially inner curved locking end (31) of the locking element (30) under the control of a thrusting movement applied to the latter towards the female fitting (10) until this locking end (31) retains said manipulating end (23) by reversibly wedging the or each ramp.

5. Connecting device as claimed in claim 4, **characterised in that** said manipulating end (23) has an axially pointed shape towards the exterior, which is bounded by a radially external face formed by the or each ramp (23a, 23b), the latter extending obliquely radially towards the exterior and axially towards the interior mating in said locked position with an oblique locking portion (32) of the locking element (30) which is terminated by said locking end (31), the or each ramp being designed to be trapped on contact with this locking portion by a clipping action on contact with this locking end.

6. Connecting device as claimed in claim 5, **characterised in that** the locking element (30) essentially comprises, from the interior radially towards the exterior:
- a radially inner, annular axial portion (33) designed to be mounted in contact with the male fitting (1),
- said oblique locking portion (32) having an annular radial section which is terminated by said axially inner, curved locking end (31) for the locking element, and
- gripping means (34, 35), preferably numbering two and diametrically opposite, each having a substantially radial support surface for applying said thrust, which is connected to said locking portion by a radially outer and substantially axial connecting portion (36).

7. Connecting device as claimed in claim 1 or 2, **characterised in that** the locking element (130) is designed to retain said manipulating end (123) indirectly so as to oppose the tilting movement of said connecting end (122) out of said groove (13) by axially wedging the locking element under at least one radial projection (105) of the male fitting (101).

8. Connecting device as claimed in claim 7, **characterised in that** said or each radial projection (105) is provided in the form of a retaining tooth constituting an extension of a support surface (104) of the male fitting (101) radially towards the exterior and underneath which a tab (133) constituting an extension of the gripping means (134) of the locking element (130) is designed to clip.

9. Connecting device as claimed in one of the preceding claims, **characterised in that** the locking element (130) further comprises a visual lock marker (137) which is respectively visible and invisible on the male fitting (101) in the non-locked and locked positions and which preferably comprises at least one axial pin (137) formed integrally with the locking element and displaceable in translation inside a seating opening onto a support surface (104) of the male fitting.

10. Connecting device as claimed in one of the preceding claims, **characterised in that**, viewed in radial section, said manipulating end (23, 123) is formed by at least two manipulating sections (23a and 23b) extending in a circle arc circumferentially spaced apart from one another, and **in that** said connecting end (22, 122) is formed by at least two connecting sections (22a and 22b) extending in a circle arc circumferentially spaced apart from one another in the same way as said manipulating sections, an axially central ring for the connecting element (20, 120) forming said support zone (21, 121) for the corresponding lever, these manipulating and connecting sections extending radially towards the exterior from this ring.

11. Connecting device as claimed in one of the preceding claims, **characterised in that** said connecting end (22, 122) has a radially outer face of convex shape essentially extending in a circle arc with a radius of curvature corresponding to that of said connecting groove (13) and a radially inner face of a substantially flat shape.

12. Connecting device as claimed in one of the preceding claims, **characterised in that** it is provided with the male fitting (1, 101), on which mounted axially are the connecting element (20, 120) and locking element (30, 130), and with the female fitting (10) in the connecting groove (13) of which said connecting end (22, 122) is mounted.

13. Connecting device as claimed in claim 12, **characterised in that** a circumferential radial excrescence (5) is formed on the male fitting (1) serving as an axial stop against which said support zone (21) of the connecting element (20) is designed to be mounted in order to facilitate the positioning of the latter in the female fitting (10).

14. Connecting device as claimed in claim 12 or 13, **characterised in that** it further comprises a substantially toroidal sealing ring (16) which is mounted in or overmoulded into a seal groove (6) of the male fitting (1, 101) and which is designed to be applied against the female fitting (10) axially towards the interior of said connecting groove (13).

15. Fuel injector return circuit comprising a tubular male fitting (1, 101) connected to a tubular female fitting (10) by a connecting device, **characterised in that** this device is as defined in one of the preceding claims.

16. Method of fitting/ dismantling a connecting device as claimed in one of claims 1 to 14 around a tubular male fitting (1, 101) and in a tubular female fitting (10) to be connected to this male fitting, **characterised in that** it comprises the following successive steps in order to fit the device:
a) the locking element (30, 130) and the connecting element (20, 120) are positioned around the male fitting, so that this locking element is mounted in contact with said manipulating end (23, 123) and said connecting end (22, 122) is disposed at the inlet of the female fitting, the connecting element being integrally mounted with the male fitting,
b) a relative force (A, A') is applied between the male fitting to which the connecting element is joined and the female fitting to bring them together, so that the connecting element is inserted by its connecting end radially between the male fitting and female fitting and at least partially facing said connecting groove (13), and then that said locking end applies a radial compression force (B) onto said manipulating end resulting in a tilting force radially towards the exterior (C) of said connecting end, which is then positioned in said connecting groove, after which
c) the locking element is pushed towards the female fitting so that the locking element holds said manipulating end in radial abutment, for said connecting end to remain positioned in said groove in a locked position due to said tilting force (F).

17. Method of fitting/ dismantling as claimed in claim 16, **characterised in that**:
- in step a), an axially lower curved locking end (31) of the locking element is mounted in sliding contact with at least one ramp (23a, 23b) of said manipulating end (23),
- in step b), said locking end applies a radial compression force (B) via the or each ramp to said manipulating end resulting in said tilting force, and **in that**
- in step c), said curved locking end moves so that it holds said manipulating end in radial abutment.

18. Method of fitting/ dismantling as claimed in claim 16, **characterised in that** in step c), the locking element (130) is wedged axially in translation underneath at least one radial projection (105) of the male fitting (101), preferably by clipping a tab (133) of this element underneath a retaining tooth (105) of the male fitting (101).

19. Method of fitting/ dismantling as claimed in one of claims 16 to 18, **characterised in that**:
- step a) is implemented by successively fitting the locking element (30) and then the connecting element (20) around the male fitting (1), so that the connecting element (20) integrally moves with the male fitting in translation and in rotation, and
- step b) is implemented by applying a translating force onto a support surface (4) of this male fitting axially towards the female fitting (10).

20. Method of fitting/ dismantling as claimed in one of claims 16 to 19, **characterised in that** step c) is implemented by applying to at least one support surface (34, 35 or 134, 135) of the locking element (30, 130) a translating force axially towards the female fitting (10) in order to clip this element either onto said manipulating end (23) or onto the male fitting (101).

21. Method of fitting/ dismantling as claimed in one of claims 16 to 20, **characterised in that** it further comprises the following successive steps for dismantling the device:
d) a radially exterior connecting portion (36) of the locking element (30, 130) is radially compressed by pinching (G), and a traction force is applied to this element axially towards the exterior (H) so as to release said manipulating end (23, 123) of the locking element, after which
e) a traction force is applied to the male fitting (1) axially toward the exterior in order to extract said connecting end (22, 122) from said connecting groove (13) by a tilting movement radially towards the interior of the latter, in response to the release of said manipulating end radially towards the exterior (J).

## Patentansprüche

1. Anschlussvorrichtung für eine Fluidübertragungsleitung, insbesondere bei Niedrigdruck, mit folgendem:
- ein Verbindungselement (20, 120), das dazu bestimmt ist, um ein männliches rohrförmiges Ansatzstück (1, 101) herum montiert zu werden, indem es an einem weiblichen rohrförmigen Ansatzstück (10) durch eine radial innere Fläche (11) des Letzteren angeschlossen wird, wobei das Verbindungselement ein axial inneres Anschlussende (22, 122) umfasst, das geeignet ist, in einer Anschlussnut (13) der inneren Fläche aufgenommen zu werden, und
- ein Verriegelungselement (30, 130), das dazu bestimmt ist, um das männliche Ansatzstück herum montiert zu werden, und das geeignet ist, ein axial äußeres Betätigungsende (23, 123) des Verbindungselements zu betätigen bzw. steuern, um das Anschlussende reversibel in eine Verriegelungsposition in der Nut zu bringen,
**dadurch gekennzeichnet, dass** das Verbindungselement einen Hebel ausbildet, der axial auf beiden Seiten eines radial inneren Auflagebereichs (21, 121) des Verbindungselements, der zur Montage gegen das männliche Ansatzstück bestimmt ist, das Betätigungsende und das Anschlussende umfasst, wobei diese geeignet sind, über die Betätigung des Verriegelungselements in radial entgegengesetzte Richtungen in der Weise zu kippen, dass das zwischen das männliche Ansatzstück und die Nut eingeführte Anschlussende zu einem ersten Zeitpunkt geeignet ist, durch radiales Kippen nach außen infolge eines radial nach innen gerichteten Kippen des Betätigungsendes, in der Nut positioniert zu werden, und zu einem zweiten Zeitpunkt geeignet ist, in der Nut entsprechend der Verriegelungsposition über ein Zurückhalten des Betätigungsendes durch das Verriegelungselement, das dem Kippen des Anschlussendes aus der Nut entgegenwirkt, verriegelt zu sein.

2. Anschlussvorrichtung nach Anspruch 1, **dadurch gekennzeichnet, dass** das Betätigungsende (23, 123) und das Verriegelungsende (22, 122) jeweils mit dem Auflagebereich (21, 121) durch zwei schräge Abschnitte (24 und 25, 124 und 125), die sich beide von diesem Auflagebereich radial nach außen erstrecken, verbunden sind, wobei der schräge Abschnitt (25, 125) durch das Anschlussende (22, 122), das vorzugsweise eine geringere Dicke als der Auflagebereich (21, 121) aufweist, endet.

3. Anschlussvorrichtung nach Anspruch 1 oder 2, **dadurch gekennzeichnet, dass** das Verriegelungselement (30) geeignet ist, das Betätigungsende (23) direkt zurückzuhalten, um dem Kippen des Anschlussendes (22) aus der Nut (13) entgegenzuwirken.

4. Anschlussvorrichtung nach einem der vorhergehenden Ansprüche, **dadurch gekennzeichnet, dass** das Betätigungsende (23) mindestens eine Rampe (23a, 23b) ausbildet, die geeignet ist, ein axial inneres, gebogenes Verriegelungsende (31) des Verriegelungselements (30) unter der Steuerung eines Andrucks, der auf Letzteres in Richtung zu dem weiblichen Ansatzstück (10) hin einwirkt, zu führen, bis durch dieses Verriegelungsende (31) das Betätigungsende (23) durch reversible Verklemmung der einen oder jeder Rampe zurückgehalten wird.

5. Anschlussvorrichtung nach Anspruch 4, **dadurch gekennzeichnet, dass** das Betätigungsende (23) eine axial nach außen zugespitze Form aufweist, die durch eine radial äußere Fläche, die durch die eine oder jede Rampe (23a, 23b) ausgebildet ist, begrenzt ist, wobei sich die Fläche schräg radial nach außen und axial nach innen erstreckt, indem sie sich in der Verriegelungsposition an einen durch das Verriegelungsende (31) endenden, schrägen Verriegelungsabschnitt (32) des Verriegelungselements (30) anschmiegt, wobei die oder jede Rampe dazu konzipiert ist, in Berührung mit diesem Verriegelungsabschnitt durch ein Einrasten beim Kontakt mit diesem Verriegelungsende eingeschlossen zu werden.

6. Anschlussvorrichtung nach Anspruch 5, **dadurch gekennzeichnet, dass** das Verriegelungselement (30) radial von innen nach außen im Wesentlichen folgendes aufweist:
- einen radial inneren ringförmigen Axialabschnitt (33), der dazu vorgesehen ist, in Berührung mit dem männlichen Ansatzstück (1) montiert zu werden,
- den schrägen Verriegelungsabschnitt (32) mit ringförmigem Radialquerschnitt, der durch das axial innere, gebogene Verriegelungsende (31) für das Verriegelelement endet, und
- Greifmittel (34, 35), vorzugsweise in der Anzahl von zwei und diametral entgegengesetzt, wobei jedes eine im Wesentlichen radiale Stützoberfläche zum Ausüben des Andrucks aufweist, die durch einen radial äußeren und im Wesentlichen axialen Verbindungsbereich (36) mit dem Verriegelungsabschnitt verbunden ist.

7. Anschlussvorrichtung nach Anspruch 1 oder 2, **dadurch gekennzeichnet, dass** das Verriegelungselement (130) geeignet ist, das Betätigungsende (123) indirekt zurückzuhalten, um dem Kippen des Anschlussendes (122) aus der Nut (13) entgegenzuwirken, und zwar durch eine axiale Verklemmung des Verriegelungselements unterhalb von mindestens einem radialen Vorsprung (105) des männlichen Ansatzstücks (101).

8. Anschlussvorrichtung nach Anspruch 7, **dadurch gekennzeichnet, dass** der oder jede radiale Vorsprung (105) durch einen Rückhaltezahn ausgebildet ist, der eine Stützfläche (104) des männlichen Ansatzstücks (101) radial nach außen verlängert und unter dem für eine Zunge (133), die die Greifmittel (134) des Verriegelungselements (130) verlängert, eine Eignung zum Einrasten besteht.

9. Anschlussvorrichtung nach einem der vorhergehenden Ansprüche, **dadurch gekennzeichnet, dass** in dem Verriegelungselement (130) ferner ein visuelles Verriegelungszeichen (137) eingebaut ist, das in der nicht verriegelten Position bzw. in der Verriegelungsposition auf dem männlichen Ansatzstück (101) sichtbar bzw. unsichtbar ist und das vorzugsweise mindestens einen axialen Stift (137) aufweist, der einstückig mit dem Verriegelungselement und translatorisch beweglich innerhalb eines Gehäuses, das auf einer Stützfläche (104) des männlichen Ansatzstücks mündet, ausgebildet ist.

10. Anschlussvorrichtung nach einem der vorhergehenden Ansprüche, **dadurch gekennzeichnet, dass** in einem Radialschnitt gesehen, das Betätigungsende (23, 123) aus mindestens zwei kreisbögenförmigen Betätigungsabschnitten (23a und 23b), die in Umfangsrichtung voneinander beabstandet sind, ausgebildet ist, und dadurch, dass das Anschlussende (22, 122) aus mindestens zwei kreisbogenförmige Anschlussabschnitten (22a und 22b), die in Umfangsrichtung in der gleichen Weise wie die Betätigungsabschnitte voneinander beabstandet ausgebildet sind, ausgebildet ist, wobei ein axial mittlerer Ring für das Verbindungselement (20, 120) den Auflagebereich (21, 121) für den entsprechenden Hebel ausbildet, wobei sich diese Betätigungs- und Anschlussabschnitte von diesem Ring ausgehend radial nach außen erstrecken.

11. Anschlussvorrichtung nach einem der vorhergehenden Ansprüche, **dadurch gekennzeichnet, dass** das Anschlussende (22, 122) eine radial äußere Fläche mit einer konvexen, im Wesentlichen als Kreisbogen mit einem Krümmungsradius, der dem der Verbindungsnut (13) entspricht, ausgebildeten Form und eine radial innere Fläche mit einer im Wesentlichen flachen Form aufweist.

12. Anschlussvorrichtung nach einem der vorhergehenden Ansprüche, **dadurch gekennzeichnet, dass** diese mit dem männlichen Ansatzstück (1, 101), auf dem das Verbindungselement (20, 120) und das Verriegelungselement (30, 130) koaxial montiert sind, und mit dem weiblichen Ansatzstück (10), in dessen Anschlussnut (13) das Anschlussende (22, 122) montiert ist, ausgestattet ist.

13. Anschlussvorrichtung nach Anspruch 12, **dadurch gekennzeichnet, dass** auf dem männlichen Ansatzstück (1) eine in Umfangsrichtung umlaufende Radialausbuchtung (5) ausgebildet ist, die einen axialen Anschlag bildet, wobei der Auflagebereich (21) des Verbindungselements (20) dazu vorgesehen ist, gegen diesen montiert zu werden, um die Positionierung des letztgenannten in dem weiblichen Ansatzstück (10) zu erleichtern.

14. Anschlussvorrichtung nach Anspruch 12 oder 13, **dadurch gekennzeichnet, dass** diese ferner einen im Wesentlichen torusförmigen Dichtungsring (16) aufweist, der in einer Dichtungsnut (6) des männlichen Ansatzstücks (1, 101) montiert oder umspritzt ist und der dazu vorgesehen ist, gegen das weibliche Ansatzstück (10) axial in Richtung auf das Innere der Anschlussnut (13) angelegt zu werden.

15. Treibstoffinjektorrückflusskreislauf, der ein männliches rohrförmiges Ansatzstück (1, 101) aufweist, das mittels einer Anschlussvorrichtung an einem rohrförmigen weiblichen Ansatzstück (10) angeschlossen ist, **dadurch gekennzeichnet, dass** diese Vorrichtung durch einen der vorhergehenden Ansprüche definiert ist.

16. Verfahren zum Montieren/Demontieren einer Anschlussvorrichtung nach einem der Ansprüche 1 bis 14, um ein männliches rohrförmiges Ansatzstück (1, 101) herum und in einem rohrförmigen weiblichen Ansatzstück (10) zum Anschließen an dieses männliche Anschlussstück, **dadurch gekennzeichnet, dass** es die folgenden aufeinander folgenden Schritte zur Montage der Vorrichtung umfasst:
a) Positionieren des Verriegelungselements (30, 130) und des Verbindungselements (20, 120) um das männliche Ansatzstück herum, so dass dieses Verriegelungselement in Berührung mit dem Betätigungsende (23, 123) montiert ist und dass das Anschlussende (22, 122) am Eingang des weiblichen Ansatzstücks angeordnet ist, wobei das Verbindungselement fest mit dem männlichen Ansatzstück verbunden montiert ist,
b) Ausüben einer Relativkraft zur Annäherung (A, A') zwischen dem männlichen Ansatzstück, mit dem das Verbindungselement fest verbunden ist, und dem weiblichen Ansatzstück in der Weise, dass das Verbindungselement mit seinem Anschlussende radial zwischen dem männlichen Ansatzstück und dem weiblichen Ansatzstück und zumindest teilweise gegenüber der Anschlussnut (13) einrückt, woraufhin das Verriegelungsende eine radiale Kompressionskraft (B) auf das Betätigungsende ausübt, die in eine radial nach außen gerichtete Kippkraft (C) des Anschlussendes umgesetzt wird, durch das dann eine Position in der Anschlussnut eingenommen wird, sodann
c) Drücken des Verriegelungselements zum weiblichen Ansatzstück hin in der Weise, dass durch das Verriegelungselement das Betätigungsende in radialem Anschlag zurückgehalten wird, damit aufgrund der Kippkraft (F) das Anschlussende in der Nut in einer Verriegelungsposition positioniert verbleibt.

17. Verfahren zum Montieren/Demontieren nach Anspruch 16, **dadurch gekennzeichnet, dass**
- im Schritt a) ein axial unteres gebogenes Verriegelungsende (31) des Verriegelungselements in gleitenden Kontakt mit mindestens einer Rampe (23a, 23b) des Betätigungsendes (23) montiert wird,
- im Schritt b) das Verriegelungsende über die oder jede Rampe eine radiale Kompressionskraft (B) auf das Betätigungsende ausübt, die in die Kippkraft umgesetzt wird, und dass
- im Schritt c) durch das gebogene Verriegelungsende das Betätigungsende in radialem Anschlag zurückgehalten wird.

18. Verfahren zum Montieren/Demontieren nach Anspruch 16, **dadurch gekennzeichnet, dass** im Schritt c) das Verriegelungselement (130) unter mindestens einem radialen Vorsprung (105) des männlichen Ansatzstücks (101) axial translatorisch eingeklemmt wird, vorzugsweise durch Einrasten einer Zunge (133) dieses Elements unter einem Rückhaltezahn (105) des männlichen Ansatzstücks (101).

19. Verfahren zum Montieren/Demontieren nach einem der Ansprüche 16 bis 18, **dadurch gekennzeichnet, dass** darin:
- der Schritt a) ausgeführt wird, indem nacheinander das Verriegelungselement (30) und dann das Verbindungselement (20) um das männliche Ansatzstücks (1) herum montiert werden, um zu bewirken, dass das Verbindungselement (20) translatorisch und rotatorisch fest mit dem männlichen Ansatzstück verbunden ist, und
- der Schritt b) ausgeführt wird, indem auf eine Stützfläche (4) dieses männliche Ansatzstücks eine Translationskraft axial in Richtung auf das weibliche Ansatzstück (10) hin ausgeübt wird.

20. Verfahren zum Montieren/Demontieren nach einem der Ansprüche 16 bis 19, **dadurch gekennzeichnet, dass** darin der Schritt c) ausgeführt wird, indem auf mindestens eine Stützfläche (34, 35 oder 134, 135) des Verriegelungselements (30, 130) eine Translationskraft axial in Richtung auf das weibliche Ansatzstück (10) hin ausgeübt wird, um dieses Element entweder auf dem Betätigungsende (23) oder auf dem männlichen Ansatzstück (101) durch Clip zu befestigen.

21. Verfahren zum Montieren/Demontieren nach einem der Ansprüche 16 bis 20, **dadurch gekennzeichnet, dass** es ferner die folgenden aufeinanderfolgenden Schritte zum Demontieren der Vorrichtung umfasst:
d) es wird ein radial äußerer Verbindungsbereich (36) des Verriegelungselements (30, 130) durch Quetschen (G) radial komprimiert und es wird eine axial nach außen gerichtete Zugkraft (H) auf dieses Element in der Weise ausgeübt, dass sich das Betätigungsende (23, 123) von dem Verriegelungselement löst, dann
e) es wird eine axial nach außen gerichtete Zugkraft auf das männliche Ansatzstück (1) ausgeübt, um das Anschlussende (22, 122) aus der Anschlussnut (13) zu entfernen, und zwar durch ein radial nach innen gerichtetes Kippen des Anschlussendes infolge des radial nach außen gerichteten Lösens (J) des Betätigungsendes.
